# EUROPEAN PATENT APPLICATION

(11) **EP 2 672 423 A1**
(43) Date of publication of application: **11.12.2013**
(21) Application number: 12171409.1
(22) Date of filing: 08.06.2012
(51) Int. Cl.: G06K 9/00, G06K 9/62

(54) **Method and apparatus for locating features of an object using deformable models**

(71) Applicant: Realeyes OÜ, 11615 Tallinn (EE)
(72) Inventor: Jeni, Laszlo, 1185 Budapest (HU)
(74) Representative: Koppel, Mart Enn

(57) **Abstract**

A method and apparatus is provided for high precision, person-independent face alignment. The approach uses a hierarchical deformable model fitting technique and implements a multi-step fitting approach. The highest level of the hierarchical process ensures the flexibility of fitting of different face configurations and constrains the lower levels. Furthermore the lower level models strengthen or weaken the higher level configurations based on how well the different level configurations fit each other.

## Description

### Technical Field

The present invention relates to a method and apparatus for locating features of an object. In particular, but not exclusively, the present invention relates to a method of fitting a model (also referred to as a 2D or 3D shape model) of a class of objects, such as faces, to a target image containing an object within that class.

### Background Art

Known is GB2360183 (A), *Image processing using parametric models, inventors Newman, et al,* describing a method and apparatus for determining a set of appearance parameters representative of the appearance of an object within an image. The system employs a parametric model which relates appearance parameters to corresponding image data of the object as well as a number of matrices, each of which relates a change in the appearance parameters to an image error between image data of the object from the image and image data generated from the appearance parameters and the parametric model. The system uses these matrices to iteratively modify an initial estimate of the appearance parameters until convergence has been reached. The parametric model is preferably obtained through a principal component analysis of shape and texture data extracted from a large number of training images.

Known is US7292737, *Unified Bayesian framework for shape registration,* inventors Zhou Yi, et al, disclosing systems and methods for shape registration are described, according to which training shape vectors are generated from images in an image database. The training shape vectors identify landmark points associated with one or more object types. A distribution of shape in the training shape vectors is represented as a prior of tangent shape in tangent shape space. The prior of tangent shape is then incorporated into a unified Bayesian framework for shape registration.

Known is W02007116208, *Method of locating features of an object,* inventors Cristinacce and Cootes, describing a method of locating features of an object, of a class of objects, such as faces, within a target image. The method comprises initialising a set of feature points within the target image, each feature point corresponding to a predetermined feature for objects of the class of objects; deriving a set of template detectors, from the set of feature points, using a statistical model of the class of objects, each template detector comprising an area of image located about the location of a feature point for an object of the class of objects; comparing the set of template detectors with the target image; and updating the set of feature points within the target image in response to the result of the comparison.

Known is D. Cristinacce, T. Cootes, Automatic feature localisation with constrained local models, Pattern Recognition 41 (10) (2008) 3054.3067*. doi:10.1016*/*j.patcog.2008.01.024.,* describing a method of automatic feature localisation with constrained local models (CLM), comprising the steps of:

1. building a point distribution model (2D) from manually annotated face images

2. building template detectors to localize facial markers by

2.1. Template Selection Tracker, comprising

2.1.1 building a collection of marker-templates (cropped areas around markers)

2.1.2. during CLM fitting selecting candidate subset of templates

2.1.3. correlation based response map generation

2.2. Templated AAM (active appearance model), comprising

2.2.1. building small AAM-s from the marker-templates

2.2.2 during fitting fit the appearance model of these small AAM-s

2.2.3. generating a correlation based response map

Known is J. M. Saragih, S. Lucey, J. F. Cohn, Deformable model fitting by regularized landmark mean-shift, International Journal of Computer Vision 91 (2) (2011) 200-215*,* describing a method using deformable model fitting by regularized landmark mean shift, comprising the steps:

1. building a point distribution model (3D) from manually annotated face images

2. training template detectors, using Logit regressor based template detector or using Support Vector Machine based template detector;

3. calculating response map using the template detectors

4. applying the regularized landmark mean-shift.

Also known is Julien Peyras, Adrien Bartoli, Hugo Mercier, Patrice Dalle: Segmented AAMs Improve Person-Independent Face Fitting, Proceedings of British Machine Vision Conference 2007*,* describing a method of using segmented active appearance models (AAM) to improve face fitting for unknown faces, comprising the steps:

1. building a 2D point distribution model

2. building a general 2D AAM

3. building a hierarchy of AAMs

3.1. Including full face model

3.2 Including 3 intermediary models: left eye and eyebrow; right eye and eyebrow; nose and mouth

3.3. Including local models for each intermediary model: 2 for eyebrows, 2 for eyes, 1 for nose and 1 for mouth

4. course to fine fitting using the AAM hierarchy

5. local appearance model fitting using the underlying image part.

Main contributions of this method are:

- overcoming the main limitation of AAM - the inability of the AAM appearance counterpart to generalize

- multi-level segmented AAM: each segment encodes a physically meaningful part of the face, such as an eyes, mouth, etc. A coarse-to-fine fitting strategy with a gradually increasing number of segments is used in order to ensure a large convergence basin.

Also known is J. M. Saragih, S. Lucey, J. F. Cohn, Deformable model fitting by regularized landmark mean-shift, International Journal of Computer Vision 91 (2) (2011) 200-215*,* describing a method of using simplified cost function of the CLM fitting by assuming several simplifications.

Also known is Rowley, H., Baluja, S., Kanade, T.: Neural network-based face detection. IEEE Trans. Pattern Anal. Mach. Intell. 20(1), 23-38 (1998), describing a method using multilayer neural network for detecting full faces with different rotations and other transformations. According to the method, the neural network is trained directly on the image pixels, to partition the image subwindows into face/non-face regions. This method models the face as a 20*20 pixel template. Again each extracted subwindow is pre-processed using lighting correction and histogram equalisation. A Multi-Layer Perceptron (MLP) is then applied to the normalised subwindow to classify the region as a face or non-face.

Also known is S. Duffner and C. Garcia, "A Connexionist Approach for Robust and Precise Facial Feature Detection in Complex Scenes," Image and Signal Processing and Analysis, 2005*,* proposing a neural architecture is a specific type of neural network consisting of six layers where the first layer is the input layer, the three following layers are convolutional layers and the last two layers are standard feed-forward neuron layers. The system transforms a raw input face image into a desired output feature maps where facial features are highlighted.

Also known is T. Senechal, L. Prevost, and S. Hanif, "Neural Network Cascade for Facial Feature Localization," Fourth Int'1 Workshop on Artificial Neural Networks in Pattern Recognition (ANNPR '10), p. 141, 2010*,* describing a method using cascade neural networks for facial landmark localization, comprising using a Viola and Jones detector to detect the face, then localizing facial markers using a cascade of neural networks and applying a course to fine approach: the first network localizing the facial regions (eye, mouth, etc) and then local networks localizing markers within these regions. No underlying point distribution model is used.

Also known is Yang Wang, Simon Lucey, Jeffrey F. Cohn: Enforcing Convexity for Improved Alignment with Constrained Local Models, 2008. CVPR 2008. IEEE Conference on Computer Vision and Pattern Recognition, p 1-8*.,* describing a method for optimizing the global warp update in an efficient manner by enforcing convexity at each local patch response surface.

Also known is Ulrich Paquet: Convexity and Bayesian Constrained Local Models, CVPR (Computer Vision and Pattern Recognition) 2009*,* disclosing use of Bayesian CLM.

### Summary of invention

The main aspect of the invention is an improvement of a CLM method, a hierarchical CLM, or so called CLM-in-CLM technique. The original formulation of the CLM technique is a holistic method, it doesn't differentiate between the different facial parts during the fitting process. According to the invention, the original method can be extended to a hierarchical representation and implement a multi-step fitting approach:

on the highest level, using a simplified CLM model, that describes the variations of the different facial parts (eyes, nose, mouth, etc), and

on the lower levels, using several CLMs defining the face in more details, e.g., the second level consists of several dense CLMs, specifically trained to these facial regions, e.g., one CLM model for eyes (or eye), another one for the mouth region, etc.

The highest level of the hierarchical CLM ensures the flexibility of fitting of different face configurations and constrains the lower level CLMs. Furthermore the lower level CLMs strengthen or weaken the higher level CLMs' configurations based on how well the different level configurations fit each other.

### Brief description of drawings

Fig 1 depicts the general framework for CLM methods;

Fig 2 depicts the hierarchical framework based CLM method of Fig 1 in details.

Fig 3 depicts a modified CLM model based method with using the Taylor approximation of the real cost function.

### Description of embodiments

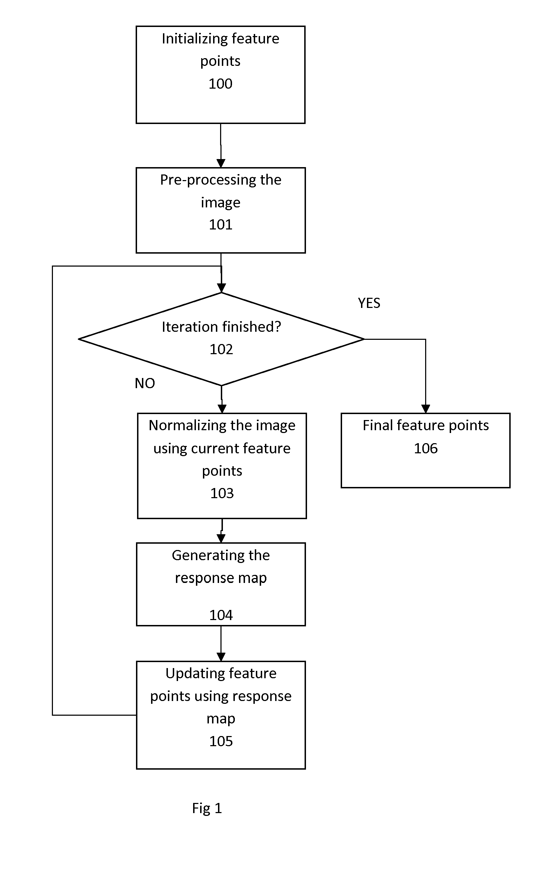

The general CLM framework is depicted in Fig 1.

**CLM overview**

Constrained Local Models (CLM) are generative parametric models for person-independent face alignment. A 3D CLM method is used, where the shape model is defined by a 3D mesh and in particular the 3D vertex locations of the mesh, called landmark points.

The general framework of the CLM method as described in Fig 1 comprises the steps of:

initializing feature points of the face 100, each feature point corresponding to a pre-determined facial feature;

pre-processing the image 101, e.g., by standard image pre-processing for reducing the effects of lighting from different directions, and for reducing camera or compression noise, e.g., by using adaptive histogram equalization;

determining if the iterative process is completed 102 (e.g., the feature points of subsequent iterations are close enough);

normalizing the image 103, e.g., by rotating the image to 0 degrees roll rotation (this is a rotation in the image plane), and scaling it to have a unit scale;

generating a response map 104, e.g., by using an exhaustive local search performed in a given region around each landmark;

updating the feature points using response map 105, and outputting the final feature points 106.

Consider the shape of a 3D CLM as the coordinates of 3D vertices of the M landmark points: **x** = (x₁, y₁, z₁, ..., x_{M}, y_{M}, z_{M})^{T}, or, **x** = (x^{T}₁, ... , x^{T}_{M})^{T}, where xᵢ = (xᵢ, yᵢ, zᵢ)^{T}. We have N samples: {**x**⁽ⁿ⁾}. CLM models assume that - apart from the global transformations; scale, rotation, and translation - all {**x**⁽ⁿ⁾} can be approximated by means of the linear principal component analysis (PCA) forming the PCA subspace.

The 3D point distribution model (PDM) describes non-rigid shape variations linearly and composes it with a global rigid transformation, placing the shape in the image frame: xᵢ(p) = sPR(xi + Φ_{iq}) + t, where i = 1, ... ,M, xᵢ(p) denotes the 2D location of the i^{th} landmark subject to transformation p, and p = {s, α, β, γ, q, t} denotes the parameters of the model, which consist of a global scaling s, angles of rotation in three dimensions (R = R1(α)R2(β)R3(γ)), translation t and non-rigid transformation q. Here xi is the mean location of the i^{th} landmark averaged over the database. Columns of Φ form the orthogonal projection matrix of principal component analysis and its compression dimension is d. Finally, matrix P denotes the projection matrix to 2D.

CLM is constrained through the PCA of PDM. It works with local experts, whose opinion is considered independent and are multiplied to each other. Local experts are trained on labelled samples.

The constraints of the PDM and the response map of the local expert in an appropriate neighborhood - can be used to express the cost function of the fitting. Expectation maximization (EM) can be used to find the (local) optimum.

While the CLM method is highly robust for interpersonal and intrapersonal variations of the face, however the registration precision is still limited to the training set of faces used to build the model. Certain face configurations that are not present in the training set are difficult to register and track. The limited ability to generalize the face component limits the fi tting performance in terms of accuracy.

CLM in CLM

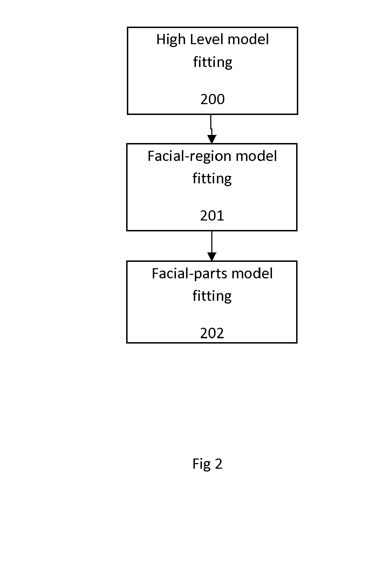

The proposed solution according to the invention is depicted in Fig 2, comprising the steps of high level CLM model fitting 200, facial-region model fitting 201 and facial-parts model fitting 202. The idea of the invention is to decompose the model space dimensionality. To achieve better fitting accuracy we rely on local models defined over a smaller face area. We can extend the original method to a hierarchical representation and implement a multi-step fitting approach. The fitting method can work in a coarse-to-fine manner and fine-to-coarse mode as well.

The ability of local models to generalize their shape is better than for larger, holistic models. This makes them potentially more accurate for the same amount of training data. However, their reduced dimension penalizes their robustness to bad initialization: local models must be well initialized.

The highest level of the process fits a holistic model. This is a simplified CLM model that describes the variations of the different facial parts (eyes, nose, mouth, etc). Lower levels in the hierarchy consist of several CLMs defining the face in more details. The second level consists of several dense CLMs, specifically trained to these facial regions (for example, one CLM model for the eyes, another one for the mouth region, etc).

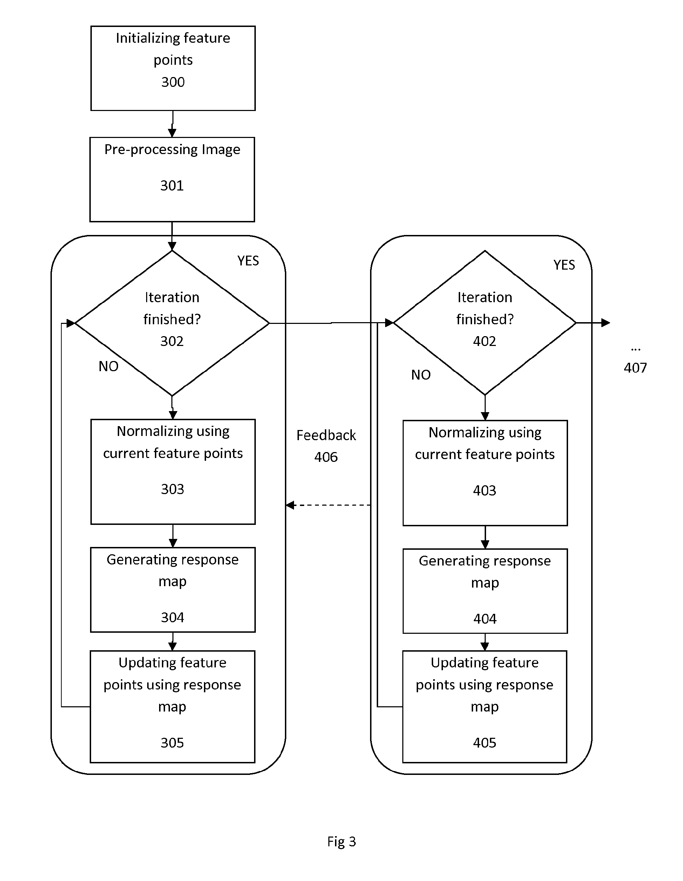

The hierarchical method is depicted in details in Fig 3. Similarly to the general CLM method, the method comprises different steps:

initializing feature points of the face 300 and pre-processing the image 301. The iterative process as in general CLM method is performed, comprising the steps of determining if the iteration is completed 302, normalizing using current feature points 303, generating response map 304 and updating feature points using response map 305.

However, the final feature points are used as an input for another iterative process on a different level, again including comprising the steps of determining if the iteration is completed 402, normalizing using current feature points 403, generating response map 404 and updating feature points using response map 405. The process includes feedback 406. The output of the iterative process may be input for yet another iterative processes on different level 407.
The highest level of the hierarchical CLM ensures the flexibility of the fitting of different face configurations and constrains the lower level CLMs. Furthermore the lower level CLMs strengthen or weaken or updates the higher level CLMs' configurations based on how well the different level configurations fit each other.

In another embodiment, CLM models can be combined with other models and algorithms, such as, e.g., active appearance model (AAM). For example, the whole face can be tracked with CLM and individual features can be tracked with other models/algorithms, e.g., AAM. Or, the whole face can be tracked by other model than CLM, and the subparts of the face are tracked with CLM. These options depend on finding the right heuristic to combine the different models and can potentially be a great improvement.

There is further advantage of combining the CLM and AAM. AAM alone cannot be used without manual initialisation of it. But if the manual initialisation is done, it is usually much more robust and accurate than CLM. CLM on the contrary has the advantage of not requiring any manual human initialisation, but is less robust and accurate than AAM. Therefore it is advantageous to use CLM for initial initialisation of AAM and then to use AAM. Such linear dependency between models is a special case of the proposed hierarchical models

Embodiments of the present invention are suitable for image interpretation tasks, for which it is necessary to automatically and accurately locate feature points. Such image interpretation tasks include amongst many others face recognition and medical diagnosis. Embodiments of the present invention have particular advantages in face localisation and recognition in static images. This can be particularly important for security applications automatic editing of face images. Furthermore, due to the inherent object tracking mechanism of the searching method of certain embodiments of the present, the searching method is particularly suited to face tracking and recognition in video sequences (particularly when the current feature points for a new frame are initialised to the converged feature points for the preceding frame). While embodiments of the present invention have primarily been exemplified with reference to the modelling of faces, it is in no way limited to this. Embodiments of the present invention can be applied for modelling and identifying features of a wide range of classes of object. Embodiments of the present invention are particularly suited to modelling and identifying features classes of objects for which there exists distinctive and corresponding landmarks between different instances of the objects.

## Claims

1. A method of modelling the visual appearance of a human face, within a target image, the method comprising: initialising a set of feature points within the target image, each feature point corresponding to a predetermined facial feature; pre-processing the image, normalizing the image; generating a response map, updating the feature points using response map, and outputting the final feature points, **characterized in that** the method further comprises repeating the steps of normalizing the image; generating a response map, updating the feature points using response map, and outputting the final feature points at different levels, wherein the highest level comprises a holistic model of the face, describing variations of different features of the face, and one or more lower level comprises models for specific facial regions, selected from the group consisting of eyes, nose, and mouth.

2. A method as in claim 1, **characterized in that** constrained local model is used on said highest level.

3. A method as in claim 1, **characterized in that** active appearance model is used on said highest level.

4. A method as in claims 1 to 2, **characterized in that** active appearance model is used on said one or more lower levels.

5. A method as in claims 1 to 2, **characterized in that** constrained local model is used on said one or more lower levels.

6. A method as in claim 2, **characterized in that** constrained local model is used for initializing the active appearance model.

7. An apparatus for modelling the visual appearance of a human face, within a target image, wherein the apparatus comprises means for initialising a set of feature points within the target image, each feature point corresponding to a predetermined facial feature; means for pre-processing the image and normalizing the image; means for generating a response map, means for updating the feature points using response map, and means for outputting the final feature points, wherein the apparatus is adapted to repeating the steps of normalizing the image; generating a response map, updating the feature points using response map, and outputting the final feature points at different levels, wherein the highest level comprises a holistic model of the face, describing variations of different features of the face, and one or more lower level comprises models for specific facial regions, selected from the group consisting of eyes, nose, and mouth.

8. A computing device for modelling the visual appearance of a human face, within a target image, the computing device comprising a processor coupled to a memory, the memory comprising computer-program instructions executable by the processor for initialising a set of feature points within the target image, each feature point corresponding to a predetermined facial feature; pre-processing the image, normalizing the image; generating a response map, updating the feature points using response map, and outputting the final feature points; repeating the steps of normalizing the image; generating a response map, updating the feature points using response map, and outputting the final feature points at different levels, wherein the highest level comprises a holistic model of the face, describing variations of different features of the face, and one or more lower level comprises models for specific facial regions, selected from the group consisting of eyes, nose, and mouth.
